# EUROPEAN PATENT APPLICATION

(11) **EP 2 653 033 A1**
(43) Date of publication of application: **23.10.2013**
(21) Application number: 12398001.3
(22) Date of filing: 20.04.2012
(51) Int. Cl.: A01N 33/12, A01N 25/34, A01N 25/28, A01N 25/30, A01P 1/00

(54) **Antimicrobial complexes**

(71) Applicant: Matera Lda, Cantanhede 3060-197 (PT)
(72) Inventor: Da Silva Ferreira, Lino, 3030-076 Coimbra (PT); Roxo Botequim, David José, 2000-338 Achete, Santarém (PT); Reina Maia e Silva, Joao, 4465-613 Leça de Balio (PT)
(74) Representative: Sampson, Eimear

(57) **Abstract**

The invention relates to an antimicrobial surfactant complexed with a nanomaterial. The surfactant can be a quaternary ammonium cationic surfactant which is coated on the surface of a nanomaterial such as a silica nanoparticle or a carbon nanotube.

## Description

The present invention relates to antimicrobial complexes and methods of their preparation, and, in particular to an antimicrobial complex comprising a nanomaterial and a surfactant. Antimicrobial-nanomaterial complexes and suspensions thereof can be used to form antimicrobial coatings with particular utility in industrial settings.

The development of antimicrobial coatings has received increasing attention in recent years, due to the need to prevent propagation of microbes on surfaces. The preparation of antimicrobial coatings for industrial purposes represents a particular challenge, due to the broad spectrum of antimicrobial activity required, the varying dimensions of the surfaces to be coated, as well as the different materials to which the surface coatings must be applied. In order to prove applicable to industrial settings, therefore, antimicrobial coatings should preferably be versatile, easy and relatively inexpensive to produce, and exhibit long-lasting antimicrobial characteristics.

Known antimicrobial coatings can be prepared by impregnating, adsorbing or covalently attaching antimicrobial agents to the relevant surface in order to provide a coating layer. Research has previously focused on the development of non-leaching surfaces capable of killing microorganisms on contact (Klibanov, J. Mater. Chem. 2007 (17) 2479-2482; Ferreira et al., J. Mater. Chem. 2009 (19) 7796-7806). Non-leaching surfaces are often considered preferable, because microbes are exposed to high surface concentrations of the antimicrobial agent compared with slow release surfaces. Known non-leaching antimicrobial coatings and preparation methodologies suffer from a number of drawbacks, however.

Methods for the permanent immobilization of synthetic polymers to the surfaces of materials are known. For example, the covalent attachment of polymers via surface-initiated polymerization and the use of coupling-reactions to immobilize polymer chains to functional groups on surfaces to be treated have been described in the art.

However, these methods involve multi-step procedures in the preparation of the antimicrobial surface, making large-scale production and commercialisation of the coatings impractical. Furthermore, the attachment of the polymers requires specific chemistry, meaning that tailored methodologies and/or surface modification are required with regards to the surface of each object to be coated.

Alternative approaches to the preparation of antimicrobial coatings include the use of coatings that are non-covalently linked to the surface, for example as described by Klibanov et al (J. Mat. Chem.' Permanently microbicidal materials coatings' 2007 (17) 2479-2482). However, in many cases, the methodologies described require multiple synthetic steps and are difficult to use in objects with different chemistries.

Therefore, despite active research in this area, there remains a need for novel antimicrobial complexes which exhibit broad spectrum antimicrobial activity and which can be readily immobilized to surfaces of a broad range of materials, without the requirement for specific surface chemistries. In addition, it would be desirable to provide antimicrobial complexes or coatings which expose microbes to high surface concentrations of the antimicrobial agent, and which exhibit sufficient life-span to make them viable for use in industrial settings. It would also be useful to have a versatile and inexpensive process for preparing surface coatings on a commercial scale.

The applicant has now discovered that surfactants can be complexed with nanomaterials, to form antimicrobial nanomaterial complexes which exhibit effective antimicrobial activity and which address some of the disadvantages of the prior art materials.

Accordingly, in an aspect of the invention there is provided an antimicrobial nanomaterial complex comprising a surfactant and a nanomaterial.

In the antimicrobial nanomaterial complex, the surfactant functions as an antimicrobial agent.

Although some surfactants are known to possess antibacterial properties, the activity of these surfactants is relatively low, making them generally unsuitable for use as antimicrobial agents due to the significantly high loading that would be required in order to obtain a useful surface-coating material. In addition, although mild antibacterial activity has been demonstrated, surfactants are not known to exhibit broad spectrum antimicrobial activity.

However, the applicant has surprisingly discovered that when an antimicrobial surfactant is complexed with a nanomaterial, significantly lower minimal inhibitory concentration is exhibited compared with the soluble surfactant alone. The lower minimal inhibitory concentration of antimicrobial surfactants in the nanomaterial complexes mean that surfactants can be effectively employed in the formation of antimicrobial preparations and coatings.

The "minimal inhibitory concentration" or "MIC" is defined as the lowest drug concentration that results in complete inhibition of visible growth of a microorganism.

The term "antimicrobial agent" as used herein is taken to mean a substance that kills (microbicidal) or inhibits (microbistatic) the growth of microorganisms. The term "antimicrobial agent" thus encompasses antibacterials, antivirals, antifungals and antiparasitics.

The antimicrobial nanomaterial complex may be a broad-spectrum antimicrobial complex and may have antibacterial, antiviral and antifungal activity.

In an embodiment of the invention, the antimicrobial nanomaterial complex is antiviral.

In the antimicrobial nanomaterial complex, the surfactant may be attached to the nanomaterial by any conventional means of attachment that allows the surfactant to be presented at the surface of the nanomaterial. For example, the surfactant may be adsorbed or immobilized on the surface of the nanomaterial. The surfactant may be coated on the surface of the nanomaterial and may interact electrostatically with the nanomaterial surface. Advantageously, the surfactant is attached directly to the nanomaterial in the complex or conjugate and is not attached to the nanomaterial by means of a linker molecule, such as a polymer.

The surfactant may be an amphiphilic polycation. The surfactant may be single-chained or multi-chained. For example the surfactant may be single-chained, di-chained or tri-chained. The chains may be of variable chain length. For example, the surfactant may include at least one hydrocarbon chain comprising between 12 and 20 carbon atoms. In particular, the surfactant may include at least one hydrocarbon chain comprising 12, 14, 16 or 18 carbon atoms.

In an embodiment of the invention, the amphiphilic polycation is a quaternary ammonium cationic surfactant. The quaternary ammonium cationic surfactant may be selected from the group consisting of dodecyltrimethylammonium bromide (DTAB), didodecyldimethylammonium bromide (DDAB), tridodecylmethylammonium chloride (TMAC), ditetradecyldimethylammonium bromide (DTDAB), dihexadecyldimethylammonium bromide (DHDAB) and dioctadecyldimethylammonium bromide (DODAB).

The term "nanomaterial" as used herein is taken to mean materials comprising particles having one or more dimensions at the nanometre scale and preferably those particles having one or more dimensions of 1 to 500 nm. Thus the term "nanomaterial" encompasses materials having both ultrafine particles (1 to 100 nm) and fine particles from 100 to 500 nm.

The nanomaterial may be a nanoparticle (NP). Suitable nanoparticles for use in the complexes of the invention include, but are not limited to gold nanoparticles, silver nanoparticles, silica nanoparticles and organic nanoparticles such as poly(lactic acid-coglycolic acid), polyethyleneimine, chytosan and poly(hyaluronic acid).

In an embodiment of the invention, the nanoparticle is a silica nanoparticle (SNP). Silica nanoparticles are particularly advantageous for the formation of stable antimicrobial complexes due to the non-cytotoxicity, low price, high stability, durability, and ease of modification by organosilane chemistry allowing the incorporation of an array of different functional groups.

Nanoparticles for immobilization in the complex can be of any suitable diameter. In particular, the average diameter of the nanoparticles can be from 2 to 500 nm; from 10 to 400 nm; from 20 to 290 nm. In an embodiment, the average diameter of the nanoparticle can be 100 nm or below, or from 20 to 100 nm.

The nanomaterial may be a carbon nanotube (CNT). Carbon nanotubes are promising for the formation of antimicrobial complexes because they are known to possess inherent antimicrobial properties (Kang et al. 'Single-walled carbon nanotubes exhibit strong antimicrobial activity' Langmuir 2007 (23) 8670- 8673).

Carbon nanotubes for immobilization in the complex may be of any suitable diameter and length. In particular, the average diameter of the nanotubes can be from 0.8 to 500 nm. The average diameter may be about 1.5 nm. The average length can be from 50 nm to 10 µm.

The carbon nanotube may be a single-walled (SWCNT) or multi-walled nanotube (MWCNT). In some embodiments single-walled nanotubes are preferred as they are known to exhibit mild antimicrobial activity. In other embodiments, multi-walled carbon nanotubes, which are less expensive, may be preferred.

In an aspect of the invention there is provided a process of preparing an antimicrobial complex as described above comprising the steps of:
- providing a solution of surfactant having a concentration above its critical micelle concentration; and
- adding the solution to a nanomaterial suspension.

The "critical micelle concentration" or "CMC" is defined as the concentration of surfactant at which phase separation occurs.

Typically, a solution of surfactant is mixed with a suspension of the nanomaterial and allowed to complex. After complexation, the mixture is centrifuged to wash away unconjugated surfactant. The method of the invention therefore represents an easy and low-cost route to the preparation of antimicrobial complexes.

Use of a surfactant in the preparation of an antimicrobial complex is envisaged. In an embodiment, an amphiphilic polycation, and preferably a quaternary ammonium cationic surfactant, can be used in the preparation of an antimicrobial complex. In this embodiment, the nanomaterial can be a silica nanoparticle or a carbon nanotube.

In an aspect of the invention there is provided use of an antimicrobial complex as described above as an antimicrobial coating.

The complex may be utilised in the form of a suspension of the nanomaterial complex in any suitable solution.

According to an aspect of the invention there is provided a method of preparing an object with an antimicrobial coating, wherein the method comprises coating at least one surface or part of a surface of the object with an antimicrobial complex as described herein.

The at least one surface or part of a surface of the device or material can be coated by any suitable means known in the art such as, for example, spray-drying, brushing or dipping.

In an embodiment of the invention, the at least one surface or part of a surface is treated with an adhesive prior to coating. Treating the surface with an adhesive prior to coating can ensure efficient immobilization of the antimicrobial nanoparticle complex. The adhesive may be a chemical adhesive.

In an embodiment, the adhesive is formed by a polyelectrolyte of opposite charge to the antimicrobial nanomaterial complex which is adsorbed or chemically reacted with the substrate. In this case, assembly of the nanoparticles into large-area uniform thin films can be achieved by layer-by-layer techniques such as described in Lee D et al.' Multilayers of oppositely charged SiO2 nanoparticles: Effect of surface charge on multilayer assembly', Langmuir 2007, 23, 8833-8837.

In an alternative embodiment, the adhesive is formed by nanoparticles of opposite charge to the antimicrobial nanomaterial conjugate. These nanoparticles can interact with the substrate by electrostatic interactions and physically immobilize the antimicrobial nanomaterial complexes of opposite charge.

In an embodiment, the adhesive is a chemical adhesive formed by polydopamine. Dopamine, a biomolecule that contains catechol and amine functional groups, found also in high concentration in mussel adhesive proteins, polymerizes at alkaline pHs to form thin adherent polydopamine films that exhibit latent reactivity toward amine and thiol groups (Lee H et al., 'Facile conjugation of biomolecules onto surfaces via mussel adhesive protein inspired coatings': Advanced Materials 2009, 21, 431).

The method of the invention can be used to apply an antimicrobial coating to any suitable surface such as, for example, metals ceramics, polymers, fibres and glass. Suitable metals include, for example, titanium and titanium alloys such as nitinol, nickel-titanium alloys and thermo-memory alloy materials; stainless steel; tantalum; nickel-chrome alloys and cobalt alloys such as cobalt-chromium alloys Elgiloy® and Phynox®. Suitable ceramic materials include, for example, oxides, carbides or nitrides of the transition elements such as titanium oxides, hafnium oxides, iridium oxides, chromium oxides, aluminium oxides and zirconium oxides. Suitable polymers include styrene and substituted styrenes, ethylene, propylene, poly(urethanes), acrylates, methacrylates, acrylamides, methacrylamides, polyesters, polysiloxanes, polyethers, poly(orthoester), poly(carbonates), poly(hydroxylalkanoates), and copolymers thereof. Attachment of the antimicrobial nanomaterial complex to a surface using an adhesive lends the method of the invention versatility as specific surface chemistries are not required. The method therefore has broad utility, and is particularly useful in industrial settings where a wide variety of materials and objects require antimicrobial protection.

Surfaces which may be coated can be in the form of films, particles, beads and fibres.

In an aspect of the invention there is provided an object with an antimicrobial coating, obtainable by the method as described herein.

In an embodiment of the invention, the antimicrobial nanomaterial complex is a surfactant-SNP complex. In an embodiment, the antimicrobial nanomaterial complex is a quaternary ammonium cationic surfactant-SNP complex. In this embodiment, the quaternary ammonium cationic surfactant preferably has two carbon chains. In a preferred embodiment, the antimicrobial nanomaterial complex is a DDAB-SNP complex.

In an embodiment of the invention, the antimicrobial nanomaterial is a surfactant-CNT complex. In an embodiment, the antimicrobial nanomaterial complex is a quaternary ammonium cationic surfactant-CNT complex. In this embodiment, the quaternary ammonium cationic surfactant preferably has two carbon chains. In a preferred embodiment, the antimicrobial nanomaterial complex is a DDAB-CNT complex. In an embodiment, the nanomaterial is a SWCNT. Alternatively the nanomaterial may be a MWCNT. In an embodiment, the antimicrobial nanomaterial complex is a DDAB-SWCNT complex.

Advantageously, the inventors have also discovered that the complexed nanomaterials can be encapsulated in order to control their spatial location in surfaces. This can be beneficial, for example, to minimise the cost of expensive nanomaterials such as carbon nanotubes while maintaining the surfactant at the surface of a coating material. As an example, the nanomaterial complexes can be encapsulated in a bead or a carrier. Specifically, the nanomaterial complexes can be encapsulated in alginate beads. In order to ensure presentation of the nanomaterial complex at the surface of the object to be coated, magnetic nanoparticles can be incorporated in the encapsulated product to direct the spatial location of the complex by use of a magnet.

The invention is now further described with reference to the following figures:
Figure 1 shows (a) SEM micrograph of SNP5 and (b) TEM micrograph of SNP80;
Figure 2 is a schematic representation of (a) surfactants with variable numbers of hydrocarbon chains and (b) dialkyldimethylammonium bromide surfactants with variable hydrocarbon chain length;
Figure 3 shows growth kinetics of (a) *C. albicans,* (b) *S. aureus* and (c) *E*. *Coli* exposed to variable concentrations of surfactants;
Figure 4 illustrates the results of thermogravimetric analysis of bare and DDAB-coated SNPs;
Figure 5 shows the influence of (a) pH, (b) SNP size and (c) time on the physical immobilization of DDAB onto SNPs;
Figure 6 shows the results of DRIFT analysis of bare SNPs;
Figure 7 DRIFT spectra of bare and DDAB coated SNPs;
Figure 8 illustrates the antimicrobial activity of SNP-DDAB;
Figure 9 illustrates the time course of antimicrobial killing by SNP80-DDAB250 and SNP-DDAB250;
Figure 10 shows antimicrobial activity of SNPs coated on glass coverslips;
Figure 11 shows antiviral activity of glass coverslips coated with DDAD-SNPs; and
Figure 12 shows (a) coating of SWCNTs with DDAB; (b) optical density of SWCNT-DDAB₁₅ and (c) optical density of SWCNT-DDAB₁₀₀.

### Detailed description of the invention

The invention is directed to antimicrobial complexes comprising nanomaterials complexed with surfactants. By way of illustration only, the invention will now be fully described in the context of a didodecyldimethylammonium bromide-silica nanoparticle complex (DDAB-SNP) and a didodecyldimethylammonium bromide- carbon nanotube complex (DDAB-CNT).

### Example 1: Characterisation of Bare Silica Nanoparticles (SNPs)

Commercially available silica nanoparticles of 5 nm (SNP5) and 80 nm (SNP80) in diameter were purchased from Eka Chemicals AB (Bohus, Sweden) and PlasmaChem GmbH (Berlin, Germany), respectively. The nanoparticles were characterised prior to conjugation by scanning electron microscopy, transmission electron microscopy and dynamic light scattering as detailed below. The specific surface area and the density of the particles were also determined.

### 1.2.1 Scanning electron microscopy (SEM) analysis

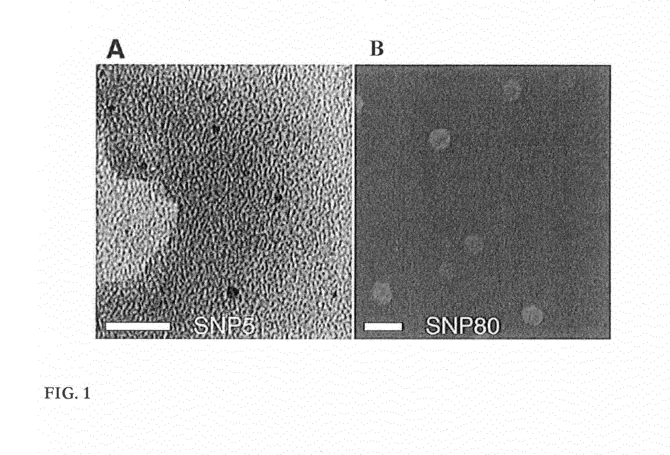

SNP5 suspended in distilled water (5µl, 0.5 mg/ml) were deposited on 0.5 cm² glass slides. The solvent was allowed to evaporate and the slides mounted on a SEM sample stub using conductive carbon cement. The samples were then carbon coated by plasma vapour deposition and analyzed by a Hitachi SU-70, with a STEM detector at 4 kV. Results of the SEM analysis are shown in Figure 1(A).

### 1.2.2 Transmission electron microscopy (TEM) analysis

For TEM analysis, a suspension of SNP80 (10 µl, 5mg/ml in Phosphate Buffered Saline (PBS)) was spray coated on a TEM 400 mesh grid. The SNPs were then observed by TEM on a FEI microscope (model TECNAI G2 20 S-TWIN) at 200 kV. Results of the TEM analysis are shown in Figure 1(B).

### 1.2.3 Dynamic Light Scattering (DLS) analysis

SNP size was determined using dynamic light scattering (DLS) *via* Zeta PALS Zeta Potential Analyzer and ZetaPlus Particle Sizing Software, v. 2.27 (Brookhaven Instruments Corporation). An aliquot (20 µl) of SNPs suspended in water (2 mg/ml) was added to 2 ml of PBS pH 7.4, vortexed and sonicated. All sizing measurements were performed at *ca.* 25°C, and all data were recorded at 90°C, with an equilibration time of 5 min. and individual run times of 60s (5 runs per measurement). The average diameters are number-weighted, and were collected from 3 independent measurements. The zeta potential of the previous SNP suspensions was recorded in at least 6 runs with a relative residual value (measure of data fit quality) of 0.03.

### 1.2.4 Specific surface area measurement

The specific surface area was assessed on an ASAP 2000 instrument, using the BET isotherm model with a relative pressure range of 0.05 - 0.15.

### 1.2.5 Density measurement

Density of the nanoparticles was measured using helium pycnometry.

The results of the SNP characterisation are illustrated in Table 1 below.

**Table 1**

| | **SNP5** | **SNP80** |
|---|---|---|
| Diameter (nm) [SEM/TEM] | 5.0 ± 2.0 | 58.3 ± 3.8 |
| Diameter (nm) [DLS] | 7.5 ± 1.7 | 78.9 ± 12.6 |
| Specific Surface Area (m²g⁻¹) [BET method] | 293.0 ± 3.4 | 218.5 ± 68 |
| Density (g/cm³) [helium pycometry] | 2.18 | 1.20 |
| Table 1: Characterisation of bare SNP | | |

SNP5 were found by DLS to have a diameter of 7.5 ± 1.7 nm, corresponding to a diameter of 5.0 ± 2.0 by SEM. SNP80 were found by DLS to have a diameter of 78.9 ± 12.6 nm, corresponding to a diameter of 58.3 ± 3.8 by TEM. BET analysis established a surface area of 293.0 ± 3.4 m²g⁻¹ for SNP5 and a surface area of 218.5 ± 68 m²g⁻¹ for SNP80. The densities of the SNPs were 2.18 g/cm³ (SNP5) and 1.20 g/cm³ (SNP80) measured by helium pycnometry.

### Example 2: Determination of critical micelle concentration (CMC)

Critical Micelle Concentration (CMC) was determined for a range of surfactants, following the method described by Brito et al. 'Determination of the critical micelle concentration of surfactants using the fluorescent probe N-phenyl-1-naphthylamine.' Anal. Biochem 1986 (152) 250-255.

The surfactants tested were:
dodecyltrimethylammonium bromide (DTAB, TCI),
didodecyldimethylammonium bromide (DDAB, Sigma-Aldrich),
tridodecylmethylammonium chloride (TMAC, Sigma-Aldrich),
ditetradecyldimethylammonium bromide (DTDAB, TCI),
dihexadecyldimethylammonium bromide (DHDAB, TCI)
and dioctadecyldimethylammonium bromide (DODAB, Sigma- Aldrich).

Briefly, the surfactants were dissolved in PBS (pH 7.4), serially diluted and mixed with N-phenyl-1-naphthylamine (NPN; TCI). The fluorescence of each sample was quantified (excitation at 350 nm; emission at 420 nm) and plotted against the concentration of each surfactant. The CMC was found at the intersection of two straight lines traced on the emission intensity plot, defining the aqueous and micellar environments. The CMC values for the tested surfactants are given in Table 2 below.

### Example 3: Antimicrobial activity of quaternary ammonium cationic surfactants

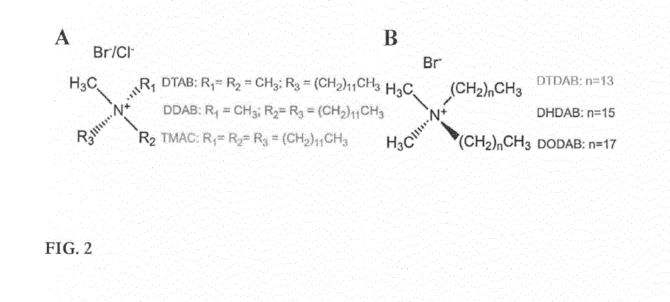

To evaluate the effect of the molecular structure of quaternary ammonium cationic surfactants on their antimicrobial activity, a range of surfactants were tested against fungi and bacteria in order to determine the minimal inhibitory concentration. The surfactants tested were single-chained (DTAB), di-chained (DDAB) and tri-chained (TMAC), having 12-C length hydrocarbon chains. In addition, to evaluate the effect of chain length on antimicrobial activity, dialkyldimethylammonium bromide surfactants with variable chain lengths including 12 (DDAB), 14 (DTAB), 16 (DHDAB) and 18 (DODAB) carbon atoms were tested. These surfactants are shown in Figure 2.

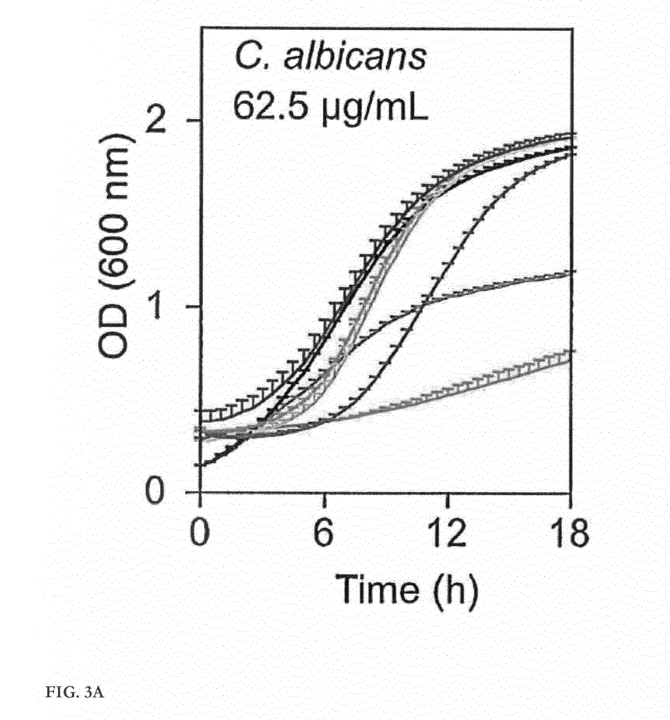

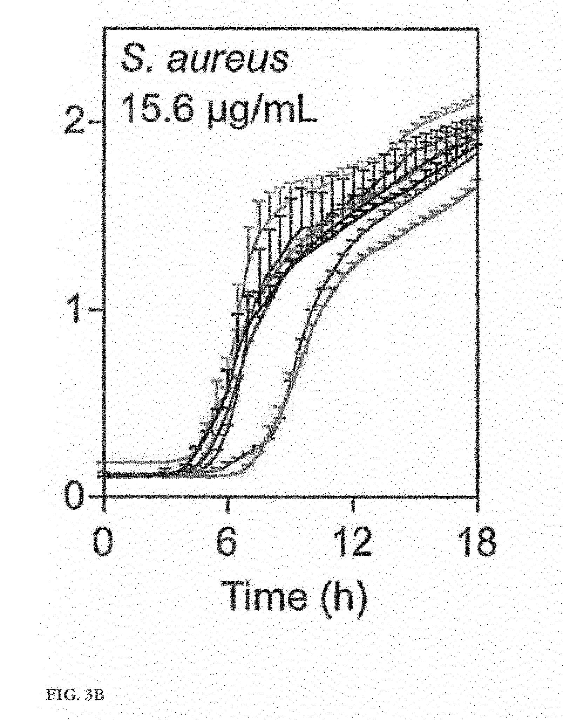

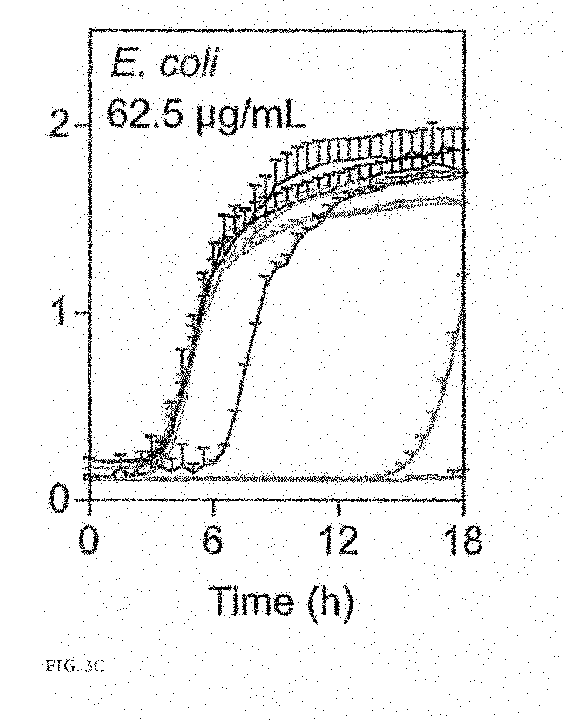

Growth kinetics of *Candida albicans* ATCC 10231 (*C. albicans,* fungi), *Staphylococcus aureus* ATCC 6538 (*S. aureus,* gram-positive bacteria) and *Escherichia coli* ATCC 25922 (E. *coli,* gram-negative bacteria) (1 × 10⁵ cells/ml) exposed to variable concentrations (from 62.5 to 500 µg/ml for fungi and from 15.6 to 500 µg/ml for *S*. *aureus* and *E*. *coli*) of the surfactants was evaluated by absorbance at 600 nm. Results are shown in Figure 3. Inoculum corresponds to prokaryotic cells incubated without surfactants. The samples were prepared in a 96-well plate and incubated for 18 h at 30°C (fungi) or 37°C (bacteria) with constant shaking in a Biotek Synergy Mx spectrophotometer.

### Results are shown in Table 2.

**Table 2**

| Surfactant | # chains | # carbons | CMC | MIC (µg/ml) | | |
|---|---|---|---|---|---|---|
| | | | (µg/ml) | *C. albicans* | *S. aureus* | *E*. *coli* |
| DTAB | 1 | 12 | 3515.1 | 250 | 31.25 | 62.5 |
| DDAB | 2 | 12 | 32.4 | 250 | 31.25 | 125 |
| TMAC | 3 | 12 | 246.2 | n.d. | 125 | n.d. |
| DTDAB | 2 | 14 | 7.8 | n.d. | n.d. | n.d. |
| DHDAB | 2 | 16 | 5.2 | n.d. | n.d. | n.d. |
| DODAB | 2 | 18 | - | n.d. | n.d. | n.d. |
| **Table 2:** Critical micelle concentrations (CMCs) and minimal inhibitory concentrations (MICs) for the surfactants tested. | | | | | | |

| | | | | | | |
|---|---|---|---|---|---|---|
| n.d. -not determined under the studied concentration range | | | | | | |

With regard to *E*. *Coli,* the toxicity ranking of all surfactants studied in this work was DTAB > DDAB > DHDAB > TMAC≈DTDAB; for C. *albicans* was DDAB> DHDAB > DTAB > TMAC > DTAB > DODAB, and finally for *S*. *aureus* was DDAB > DTAB > DHDAB > DODAB ≈ DTDAB > TMAC. DDAB is the most effective in the inhibition of C. *albicans* (125 µg/ml) and *S*. *aureus* (31.3 µg/ml), while DTAB is the most effective in the inhibition of *E*. *coli* (125 µg/ml). Results suggested that antimicrobial activity is higher for surfactants having two hydrocarbon chains formed by 12 carbons than for those with C-14, C-16 or C-18 chains.

### Example 4: Physical immobilization of surfactants on SNPs

Based on the results of example 3 above, DDAB was chosen for further investigation. SNPs were mixed with aqueous solutions of DDAB at different concentrations and pHs, for varying lengths of time to facilitate absorption. Concentrations of DDAB above its CMC (32.4 µg/ml, example 2 above) were tested (i.e. 200, 500, 1000 and 2000 µg/ml for DDAB₅₀-SNP, DDAB₁₂₅-SNP, DDAB₂₅₀-SNP and DDAB₅₀₀-SNP, respectively). The concentrations used were 50, 125, 250 and 500 µg of DDAB per mg of SNPs (suspension of 5%, w/v) and therefore per 0.293 m² or 0.218 m² in case of SNP5 and SNP80, respectively (taking into account the surface areas of 293.0 ± 3.4 m²g⁻¹ and 218.5 ± 68 m²g⁻¹ for SNP5 and SNP80, respectively).

Specifically, aqueous suspensions of SNP5 or SNP80 (5% w/v, in (i) distilled water; (ii) 0.1M citrate/sodium citrate buffer pH 3.0 and (iii) 0.1M borate/NaOH buffer pH 9.0) were added to an aqueous solution of DDAB (50, 125, 250 and 500 µg per mg of SNPs), for variable time (30 min, 1 h, or 3 h), under vigorous magnetic stirring (800 rpm) at room temperature.

After the adsorption period, the suspension of the SNPs was centrifuged (30 min, 40,000 rpm for SNP5; 20 min, 10,000 rpm for SNP80), washed two times with distilled water and finally freeze-dried. Importantly, aqueous solutions of DDAB (i.e. without SNPs, forming vesicles with an average diameter of 57 nm and a zeta potential of 17.11 ± 2.15 mV) centrifuged at the same velocities, did not form a pellet.

### Example 5: Quantification of immobilized surfactant

The adsorption of DDAB to SNPs was determined by conventional and high resolution modulated Thermogravimetric Analysis (TGA).

The thermal behavior of the samples was evaluated by simultaneous thermal analysis (STA; heat-flux DSC and TGA), by using a TA Instruments SDT Q600 equipment (thermobalance sensitivity: 0.1 µg), which was previously calibrated in the range 25-1000 °C by running tin and lead as melting standards, at a heating rate of 10 °C min⁻¹, using open alumina crucibles and a dry nitrogen purge flow of 100 ml min⁻¹. The mass loss measured in the temperature range from 200 to 350°C was used to calculate the percentage of surfactant adsorbed to a certain mass of SNPs.

The mass loss process was further studied in detail by high-resolution modulated thermogravimetric analysis (HiRes-M-TGA) in a TA Instruments Q500 thermogravimetric apparatus (thermobalance sensitivity: 0.1 µg). The temperature calibration was performed in the range 25-1000 °C by measuring the Curie point of nickel standard. Open platinum crucibles and a dry nitrogen purge flow of 100 ml min⁻¹ were used. The experiments were performed under a dynamic rate mode with a (maximum) heating rate of 2 °C min⁻¹, a modulation period of 200 s, and a temperature amplitude of ±5 °C.

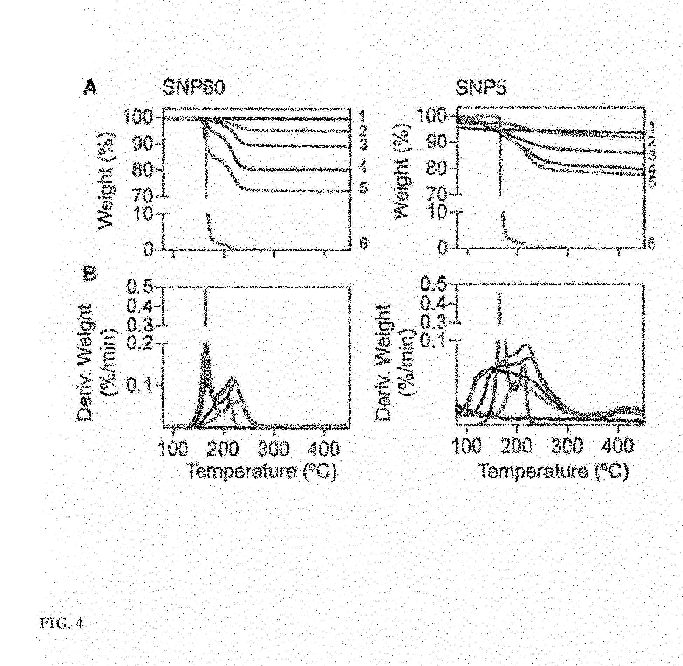

The results of the thermogravimetric analysis are shown in Figure 4A, which shows:
(1) SNP5 or SNP80 without DDAB; (2-5) SNP5 or SNP80 coated with an initial concentration of DDAB of (2) 50 µg, (3) 125 µg or (4) 250 µg or (5) 500 µg per mg of SNP; (6) DDAB. Figure 4B is a derivative of the TGA plots of the DDAB-SNP5 and DDAB-SNP80 samples.

Depending on the initial concentration of DDAB, SNP5 was found to immobilize between 57 and 210 µg of DDAB per mg of SNP, while SNP80 was found to immobilize between 45 to 275 µg of the conjugate per mg of SNP (Fig. 4A). For the initial DDAB concentrations of 50 and 125 µg/mg silica, the amount of surfactant physically adsorbed onto SNP5 is higher than on SNP80, while the opposite was observed when an initial concentration of DDAB of 500 µg was used per mg of silica (see below). The derivatives of the TGA plots of DDAB-SNP80 samples indicate the presence of three major peaks at 160-170°C, 190-200°C and 210-230°C (Fig. 4B). The first peak at 160-170°C is attributed to desorption of monomeric DDAB molecules, whose hydrocarbon chains are partially inserted in the bilayer; the second peak at 190-200°C is ascribed to desorption of the DDAB molecules in the outer layer of the DDAB bilayer coated on SNPs; finally, the third peak at 210-230°C is related to desorption of the DDAB molecules bonded to the SNPs (Nikoobakht et al. 'Evidence for bilayer assembly of cationic surfactants on the surface of gold nanorods'. Langmuir 2001 (17) 6368-6374; Zhang et al. 'Didodecyldimethylammonium bromide lipid bilayer-protected gold nanoparticles: synthesis, characterization, and self-assembly. Langmuir 2006 (22) 2838-2843). Monomeric DDAB adsorbed to the bilayer (first peak) is only present in DDAB₂₅₀-SNP80 and DDAB₅₀₀-SNP80 samples.

The derivatives of the TGA plots in DDAB-SNP5 indicate the presence of two major peaks: the first one between 150°C and 195°C, and the second one between 218°C and 255°C (Fig. 4B). The first peak is likely attributed to desorption of DDAB molecules in the outer layer of the bilayer coated on SNPs, while the second peak due to the desorption of DDAB bonded to the SNPs. The differences between the temperatures of the peaks in DDAB-SNP5 and DDAB-SNP80 samples are likely due to differences in the curvature of the nanoparticles and in the interactions of DDAB chains among them and with the silica nanoparticles.

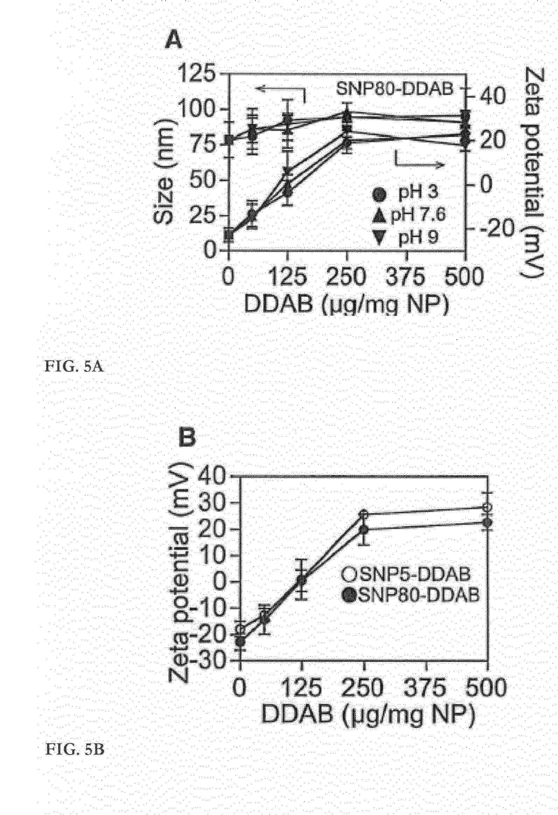

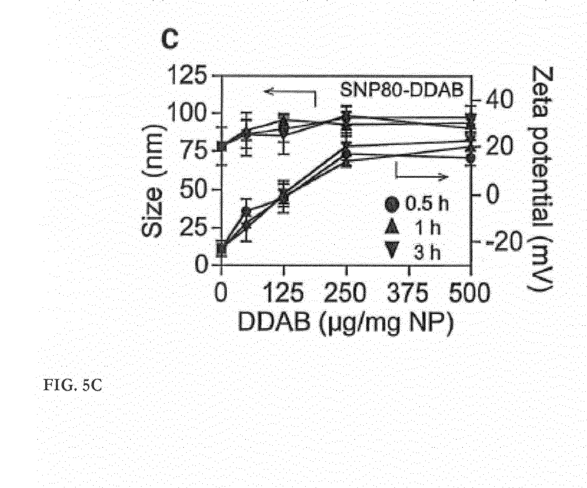

The influence of the concentration, pH and time on the physical immobilization of DDAB to SNPs was also assessed and the results are shown in Figures 5A-5C. Figure 5A shows the influence of pH on the physical immobilization of DDAB onto SNP80. The size and the zeta potentials of the SNPs were evaluated. Figure 5B shows the influence of SNP size on the physical immobilization of DDAB onto SNPs. Figure 5C shows the influence of time on the physical immobilization of DDAB onto SNPs.

According to Figure 5, as the concentration of DDAB to SNP80 increased, the zeta potential of SNPs became positive, peaking for concentration of 250 µg of DDAB per mg of SNPs (although a slight increase was observed for higher concentrations). Similar results were obtained for SNP5 (Fig. 5B). In the case of SNP80, the increase in the zeta potential was followed by an increase in the average diameter of the SNPs due to the adsorption of the surfactant (Fig. 5A).

The range of times (30 min, 1 hr, 3hr) (Fig. 5C) tested showed little effect on the amount of DDAB adsorbed, as did the pH. No significant differences in terms of zeta potential and size were found for SNP formulations obtained from absorption times above 30 minutes and at different pHs.

### Example 6: DRIFT Analysis

To further characterize the adsorption of DDAB to SNPs, Diffuse Reflectance Infrared Fourier Transform Spectroscopy (DRIFT) analysis was carried out. DRIFT analysis of lyophilized DDAB vesicles and of the bare and DDAB-coated SNPs was performed using a Mattson RS1 FTIR spectrometer with a Specac Selector, in the 400-4000 cm⁻¹ range (wide band MCT detector), at 4 cm⁻¹ resolution. The spectra were the result of 500 co-added scans for each sample, ratioed against the same number of scans for the background (ground KBr, FTIR grade from Aldrich). The samples were previously ground and mixed with KBr in appropriate proportions to obtain spectral absorbance in the range of applicability of the Kubelka-Munk transformation (Kubelka et al. 'Ein Beitrag zur Optik der Farbanstriche.' Z. Tech. Phys. 1931 (10) 593-601).

### 6.1 Bare SNP5 and Bare SNP80

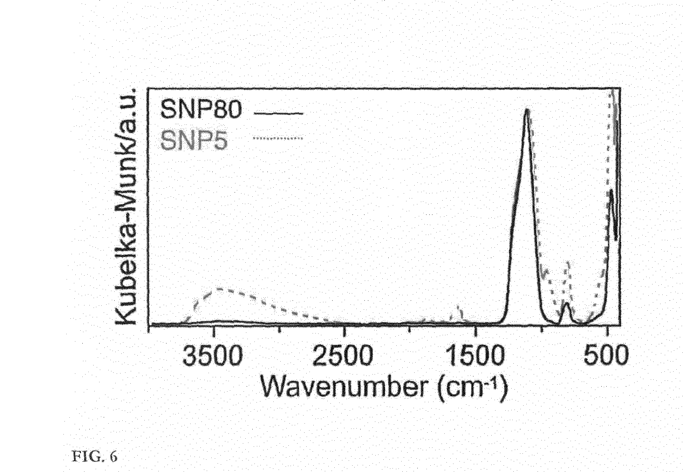

The results of the DRIFT analysis are shown in Figure 6 for bare SNP5 and bare SNP80. The results show that SNP5 and SNP80 have different structures. From Figure 6 it can be seen that the main silica band (νₐₛSi-O-Si, at ∼1100 cm⁻¹) is shifted ∼12 cm⁻¹ to higher wavenumbers for SNP80 and is much narrower (FWHH ∼173 cm⁻¹, versus ∼207 cm⁻¹ for SNP5). The νₐₛSi-O-Si band was decomposed into a sum of four Gaussian functions by a nonlinear least squares fitting method, assuming that the elementary SiO₄ units are arranged mostly in (SiO)₄ and (SiO)₆ siloxane rings (Fidalgo et al. 'Chemical tailoring of porous silica xerogels: Local structure by vibrational spectroscopy'. Chem. Eur. J. 2004 (10) 392-398) and that in each type of ring this mode is split into a pair of optic components (longitudinal, LO, and transverse, TO). In both SNP5 and SNP80 the 4-rings are predominant (their relative area is 64% in SNP5 and 66% in SNP80), as usual for silica gels. However, the LO-TO splitting is smaller for both types of rings in SNP80, which is associated with a higher porosity (Fidalgo et al. 'Chemical Control of Highly Porous Silica Xerogels: Physical Properties and Morphology' Chem. Mater. 2003 (15) 2186-2192) and corroborates the density measurements. The deconvolution results are shown in Table 3. Furthermore, the SNP5 are considerably more hydrophilic, since their spectrum evidences strong νSi-O (dangling from broken siloxane bridges or in silanol groups) and vO-H bands, at 960 and centered at 3300 cm⁻¹, respectively, and also some adsorbed water (δHOH band, at 1630 cm⁻¹). These bands are extremely weak (vO-H and δHOH) or even absent (νSi-O_{d}) in the spectrum of SNP80. Therefore, the SNP80 have a considerably lower content of surface hydroxyl groups. Finally, the broad vO-H band for SNP5 also indicates that the hydroxyl and/or silanol groups are involved in a variety of hydrogen bonds, suggesting that some aggregation between particles may occur. These features are unlikely to occur in SNP80. Both samples have a small proportion of free OH groups, which are more significant in SNP80.

### 6.2 SNP-DDAB

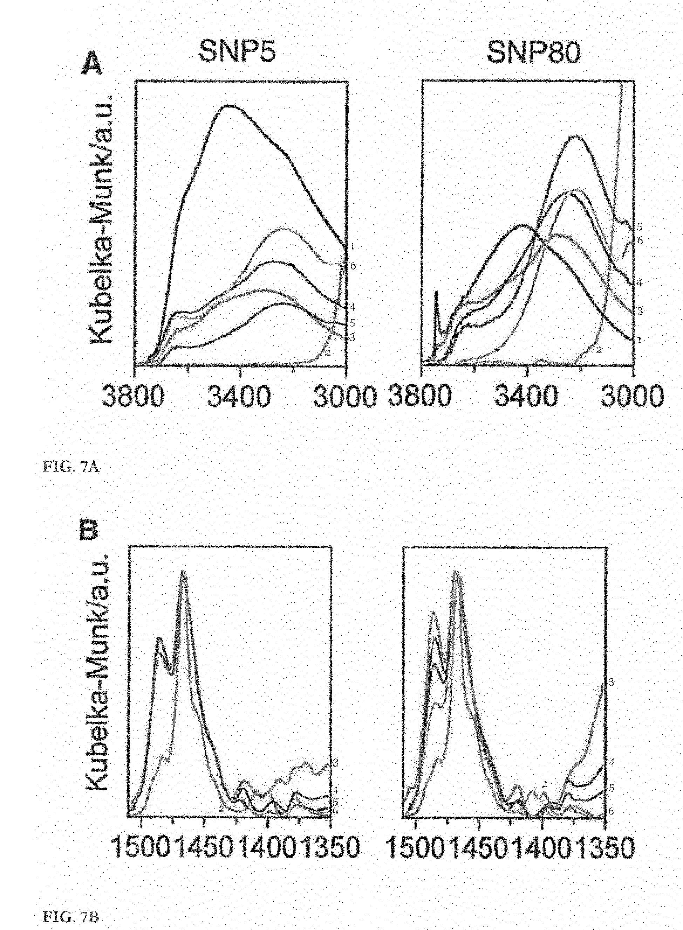

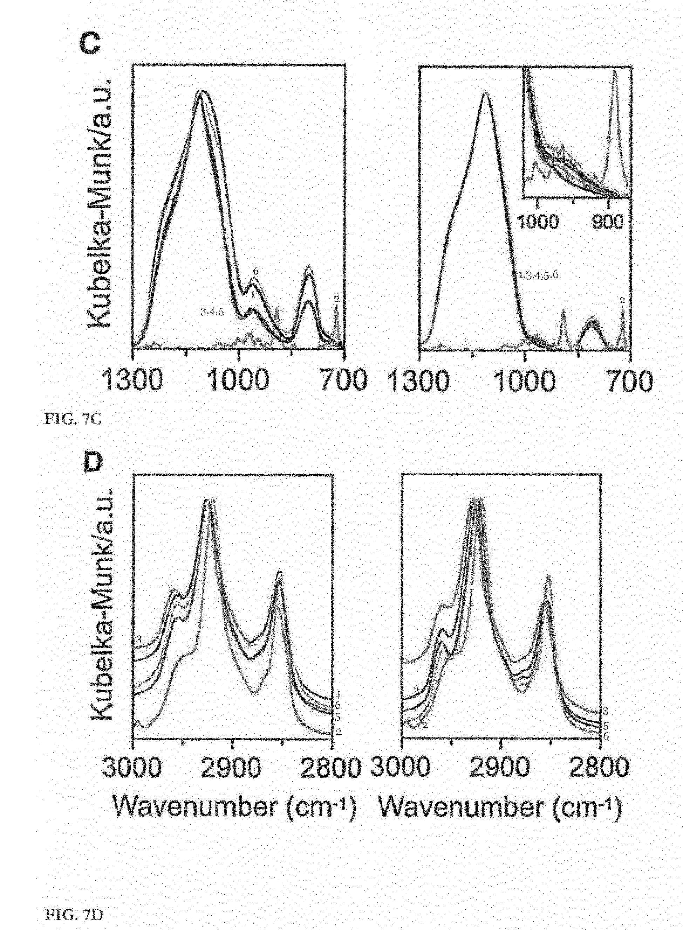

To further characterize the adsorption of DDAB to SNPs, DRIFT analysis of the coated SNPs was performed. Figure 7 illustrates DRIFT analysis of DDAB-SNP. In these spectra, SNPs are shown by 1, DDAB vesicles by 2, DDAB₅₀-SNP by 3, DDAB₁₂₅-SNP by 4, DDAB₂₅₀-SNP by 5 and DDAB₅₀₀-SNP by 6. (A) O-H stretching region, normalized to the main silica band; (B) CH deformation region, normalized to the δ_{sc}CH₂ mode; (C) silica fingerprint region; (D) C-H stretching region, normalized to the νₐₛCH₂ band.

The maximum of the vO-H band shifts considerably to lower wavenumbers upon DDAB adsorption and as DDAB concentration increases up to 250 μg/mg silica, indicating that the fraction of the more interacting hydroxyl groups increases with the DDAB load. This effect is clearer for SNP80 and suggests the involvement of OH groups as anchor sites for DDAB. However, the shift becomes very small when increasing the DDAB load to 500 μg/mg silica, which shows that further modifications at the SNP surface are negligible (Fig. 7A). The two deformation modes assigned to methyl and methylene groups bonded to N⁺ (at 1408 and 1398 cm⁻¹ in DDAB vesicles) appear shifted to higher and lower frequencies, respectively (Fig. 7B). This perturbation must be induced by the interaction of the polar head with the silica surface (Hostetler et al. 'Infrared Spectroscopy of Three-Dimensional Self-Assembled Monolayers: N-Alkanethiolate Monolayers on Gold Cluster Compounds.' Langmuir 1996 (12) 3604-3612) corroborated by the changes observed in the C-N⁺ stretching modes in samples SNP80 (the four bands observed at 974, 966, 941 and 920 cm⁻¹ in DDAB appear as just one shoulder at 980 to 966 cm⁻¹ when it adsorbs on SNP80) (Fig. 7C). The relative intensities of the δ_{sc}CH₂(N⁺) and δₐₛCH₃(N⁺) bands with respect to the δ_{sc}CH₂(chain), at 1468 cm⁻¹, decrease with surface coverage as a consequence of some inhibition due to the increasing density of neighbour heads. Figure 7C shows an interesting difference between SNP5 and SNP80 upon coating: while the larger particles keep their silica structure, in the small SNP5 the νₐₛSi-O-Si becomes narrower. Table 3 shows the results of the νₐₛSi-O-Si band deconvolution in Gaussian components for bare SNPs and coated with DDAB. Its quantitative analysis showed that the populations of four-fold and six-fold rings invert, *i*.*e*., part of the tensioned siloxane bonds in (SiO)₄ rings are broken due to the electrostatic interactions with DDAB, converting into (SiO)₆ units. When the DDAB load is very high (500 μg/mg silica), this tendency reverts, suggesting that part of the vesicles assemble around aggregated silica particles.

**Table 3**

| | | **SNP5** | **SNP5-DDAB₅₀** | **SNP5-DDAB₅₀₀** | **SNP80** | **SNP80-DDAB₅₀** | **SNP80-DDAB₅₀₀** |
|---|---|---|---|---|---|---|---|
| LO (SiO)₆ | **ν̅ /cm⁻¹** | 1231 | 1207 | 1209 | 1212 | 1212 | 1209 |
| | %A | 2.7 | 22.3 | 21.6 | 21.0 | 19.9 | 21.0 |
| LO(SiO)₄ | **ν̅ /cm⁻¹** | 1184 | 1152 | 1167 | 1170 | 1172 | 1171 |
| | %A | 33.2 | 20.2 | 8.9 | 9.0 | 6.0 | 4.2 |
| TO (SiO)₄ | **ν̅ /cm⁻¹** | 1112 | 1118 | 1121 | 1113 | 1111 | 1112 |
| | %A | 30.6 | 10.0 | 29.5 | 57.1 | 66.7 | 62.1 |
| TO (SiO)₆ | **ν̅ /cm⁻¹** | 1055 | 1079 | 1060 | 1049 | 1048 | 1046 |
| | %A | 33.4 | 47.5 | 40.0 | 12.9 | 7.4 | 12.6 |
| | | | | | | | |
| δ(SiO)₆/ cm⁻¹ | | 176 | 128 | 149 | 163 | 164 | 163 |
| δ(SiO)₄/ cm⁻¹ | | 72 | 34 | 46 | 57 | 61 | 59 |
| % (SiO)₆ | | 36.1 | 69.9 | 61.6 | 33.9 | 27.3 | 33.7 |
| % (SiO)₄ | | 63.9 | 30.1 | 38.4 | 66.1 | 72.7 | 66.3 |
| Table 3: νₐₛSi-O-Si band deconvolution | | | | | | | |

ν - wavenumber of maximum absorption, cm⁻¹; % A - percentual area; LO(SiO)*ₓ* - longitudinal-optic component of siloxane x-rings; TO (SiO)*.ₓ* - transverse-optic component of siloxane *×*-rings; δ (SiO)*ₓ* - LO-TO splitting of siloxane x-rings; %(SiO)*ₓ* - total percentual area of siloxane x-rings.

In Fig. 7D a significant shift of the νₐₛCH₂ to a higher wavenumber for DDAB₅₀-SNP5 and DDAB₅₀-SNP80 was observed when compared to DDAB vesicles (from 2920 to 2927 and 2928 cm⁻¹, respectively) and a more subtle shift for the νₛCH₂ band (from 2852 to 2856 and 2858 cm⁻¹, respectively). These shifts decrease when increasing the DDAB load, and become within the spectral resolution for samples DDAB₅₀₀-SNP5 and DDAB₅₀₀-SNP80. It is known that the symmetric and anti-symmetric modes of the methylene groups of DDAB are used as indicators of the ordering of the alkyl chains, higher frequencies corresponding to a higher density of gauche defects (Kung et al. 'Fourier-Transform Infrared Spectroscopic Study of the Adsorption of Cetyltrimethylammonium Bromide and Cetylpyridinium Chloride on Silica.' Langmuir 1993 (9) 263-267). The observed spectral changes show that the alkyl chains of adsorbed DDAB have more *gauche* conformations (*i.e.* form a more disordered layer) for lower loads, becoming more ordered (*all-trans*) as coverage increases, probably stabilized by interchain dispersion interactions. The relative intensity of the νₛCH₂ band (2854 cm⁻¹) is smaller for those DDAB chains with more *gauche* defects adsorbed on SNPs. The relative intensity of the νₐₛCH₃ band (∼2953 cm⁻¹) is higher for all the coated SNPs than for DDAB vesicles, but it decreases as the surfactant concentration increases, indicating that the terminal methyl groups lose some freedom as the first layer becomes denser and the bilayer is formed (Cheng et al. 'Synthesis and Self-assembly of Cetyltrimethylammonium Bromide-capped Gold Nanoparticles' Langmuir 2003 (19) 9434-9439). There is one exception for sample DDAB₅₀₀-SNP5, which is consistent with some vesicles forming at the surface of aggregated silica particles, resulting in less confined terminal methyl groups.

Taking into account that the SNP5 are much richer in OH groups, a higher adsorption yield would be expectable for low DDAB concentrations, while the first layer is being formed (up to 125 μg/mg silica). This was confirmed by the TGA results and also by DRIFT, comparing the relative intensities of the CH₂ and CH₃ deformation bands versus the main silica band.

Based on the concentrations of DDAB adsorbed to SNPs and on the efficiency of the adsorption process, the ratio 250 μg of DDAB per mg of SNPs was selected (SNP-DDAB₂₅₀) for further experiments.

### Example 7: Immobilization of -DDAB-SNP onto a surface

Glass coverslips were coated as described in Paulo C. et al. 'Antifungal nanoparticles and surfaces'. Biomacromolecules 2010 (11) 2810-2817. Basically, round glass coverslips (Ø=12 mm) were initially cleaned by ultrasonication in successive 10 min steps in acetone, methanol:H₂O (1:1) and chloroform. The coverslips were then placed in 24-well plates, one per well, immersed in 0.5 ml dopamine hydrochloride solution (2 mg/ml in 10 mM Tris buffer pH 8.5), shaken overnight (150 rpm orbital shaking) and finally rinsed with distilled water. The coverslips were dried and covered with a suspension of SNP5 or DDAB₂₅₀-SNP5 (20 μl each, 5 mg/ml in 10 mM Tris buffer pH 8.5), dried and immersed in 0.5 ml Tris buffer overnight. This process was repeated three times. The washing water was analysed by DLS *via* Zeta PALS Zeta Potential Analyzer in order to assess the number of particles removed from the surface (given by the counts per second). It was possible to immobilise 222.8 and 243.9 μg/cm² of SNP5 and DDAB₂₅₀-SNP5, respectively. Because no amine or sulfhydryl groups exist in DDAB₂₅₀-SNP5, π-π interactions and hydrogen bonding likely mediate the immobilization of SNPs to the polydopamine-coated surface.

### Example 8: Antimicrobial activity of DDAB-SNP

SNP5 or SNP80 coated with DDAB (SNP5-DDAB₂₅₀ or SNP80-DDAB₂₅₀) were tested in suspension against *C*. *albicans, Aspergillus oryzae* ATCC 46244 (*A. oryzae*; mold), *Penicillium ochrochloron* ATCC 9112 (*P. ochrochloron*; mold), *S. aureus* (bacteria gram-positive) and E. *coli* (bacteria gram-negative). Yeast Peptone Dextrose (YPD) and Tryptone Soy Yeast (TSY) media were used to culture yeast and bacteria, respectively.

DDAB₂₅₀-SNP5 or DDAB₂₅₀-SNP80 suspended in culture medium (500µg/ml) was added to (i) 1ml YPD media containing 1 × 10⁵ cells of C. *albicans,* (ii) 1 ml TSY medium containing 1 × 10⁶ cells of *E*. *Coli* or *S. Aureus,* or (iii) 1ml water containing 1 × 10⁵ cells /ml of *A oryzae* or *P*. *ochrochloron spores.* Cells were incubated for 6 h at 30°C (fungi) or 37°C (bacteria) with orbital shaking (150 rpm). Then, an aliquot of the medium was serially diluted in sterile water and plated on YPD agar plates (1% yeast extract, 2% peptone, 2% dextrose, 2% agar) or TSY agar plates (3.3% tryptic soy broth, 0.3% yeast extract, 1.7% agar). Finally, the plates were incubated at 30°C and 37°C for 18 h and the number of colony forming units (CFU) was counted and compared with the controls (SNP5 or SNP80) and the inoculum (prokaryotic cells incubated without SNPs). Minimum inhibitory concentrations (MICs) were determined by the broth microdilution method according to the National Committee for Clinical Laboratory Standard (for yeasts; NCCLS; M27A2E) and the Clinical and Laboratory Standards Institute (for bacteria; CLSI; M07-A8) guidelines.

To evaluate the anti-mold activity of SNP, suspensions of spores from *Aspergillus* or *Penicillium* were prepared from grown cultures on Potato Dextrose Agar (PDA) plates at 30°C. DDAB₂₅₀-SNP80 suspended in sterile distilled water (500 µg/ml) was incubated with a suspension of spores (1 × 10⁵ spores/ml, in sterile distilled water) for 6 h, at 150 rpm and 30°C. At the end of the incubation, an aliquot of the medium was serially diluted in sterile distilled water and plated on PDA plates (3.3% potato dextrose broth, 1.1% agar). The plates were then incubated at 30°C and CFU counted after 3 days and compared with the controls (SNP5 or SNP80) and the inoculum (spores without SNP).

To evaluate the biological activity of DDAB₂₅₀-SNP5 or DDAB₂₅₀-SNP80 against yeast, bacteria and molds in multiple challenges, the particle suspension (3 mg/ml) was centrifuged (20 min, 14,000 rpm) after the previous antimicrobial activity assay and the SNPs resuspended in YPD medium containing *C*. *albicans* (1 × 10⁵ cells/ml), TSY medium containing *S*. *aureus or E. coli* (1 × 10⁶ cells/ml), or distilled water containing spores (1 × 10⁶ spores of *A. oryzae* or *P. ochrochloron).* The suspension was incubated in an orbital shaker for 6 h at 30°C (fungi and molds) or 37°C (bacteria) and the number of CFU was determined as described above.

Growth kinetics of *C*. *albicans, S. aureus* and E. *coli* (1 × 10⁵ cells/ml) exposed to variable concentrations of DDAB₂₅₀-SNP5 or DDAB₂₅₀-SNP80 (from 3.1 to 50 µg/ml for fungi and *S*. *aureus* and from 150 to 1000 µg/ml for *E*. *coli*) were evaluated by absorbance at 600 nm. Inoculum corresponds to prokaryotic cells incubated without SNPs. The samples were prepared as described above.

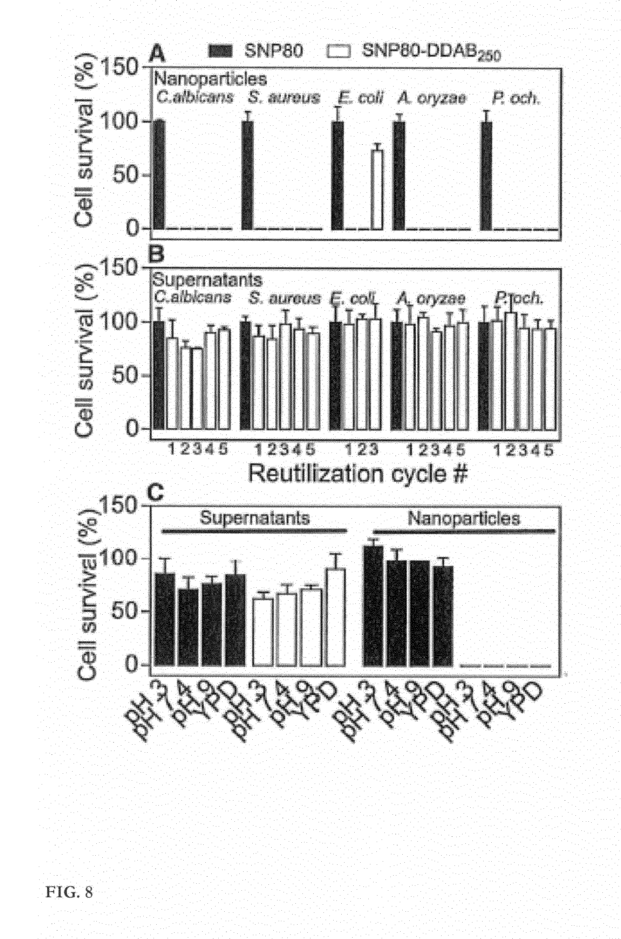

As described above, after 6h of exposure an aliquot of the cell suspension was plated on agar plates for 18 h and the number of yeast, bacteria or mold colonies was counted (Fig. 8A). SNP5 or SNP80 without physically adsorbed DDAB showed no significant antifungal activity. In contrast, SNPs incorporating DDAB killed 100% of the microorganisms. In addition, SNP5 or SNP80 modified with DDAB can be reused for 5 times (maximum number of rounds tested) without losing their activity against C. *albicans, S. aureus, A. oryzae* and *P. ochrochloron.* SNP80-DDAB₂₅₀ lost their activity against E. *coli* at the 3^{rd} round (Fig. 8A).

The MIC for SNP5-DDAB₂₅₀ against *C*. *albicans, S. aureus,* and E. *coli* was 25, 12.5 and 500 µg/ml, respectively, while for SNP80-DDAB₂₅₀ was 50, 25 and above 1000 µg/ml (Table 4). At these concentrations, coated SNP5 formulations have 4.5, 2.2 and 89.1 µg of DDAB, while SNP80 have 9.7, 4.9 and 194.4 µg of DDAB, respectively (Table 4). Importantly, with the exception of MIC values obtained against E. *coli,* the MIC values of SNPs coated with DDAB are much below the MIC of DDAB solutions (*C. albicans*: 125 µg/ml; *S*. *aureus* 31.25 µg/ml; *E*. *coli*: 125 µg/ml).

To assess the relative contributions from surfactant release and SNP killing, SNP80-DDAB₂₅₀ were incubated in YPD or TSY mediums or distilled water for 6 h, centrifuged and the supernatant collected and tested against microorganisms. Limited killing was observed (below 25%) suggesting that antimicrobial activity of the SNPs is mainly mediated by contact (Fig. 8B).

### Example 9: Antimicrobial activity of SNP-DDAB over time

The antimicrobial activity of DDAB₂₅₀-SNP80 over time was evaluated as follows. Samples of DDAB₂₅₀-SNP80 (1 mg/ml) were maintained in 0.1 M citrate/sodium citrate buffer pH 3.0, PBS pH 7.4, 0.1 M borate/NaOH buffer pH 9.0 and YPD medium for 60 days. The buffers and the YPD medium were changed every 3 days. For that purpose, SNPs were centrifuged at 14,000 rpm for 20 min, and the buffer/medium replaced by a new one. After 60 days, the SNPs were centrifuged (same conditions as before), washed with distilled water, and freeze-dried before testing antifungal activity with *C*. *albicans* (1 × 10⁵ cells/ml). After an incubation of 6 h, an aliquot of the medium was serially diluted in distilled water and plated in agar to assess the number of microorganisms. The results are shown in Figure 8C. DDAB₂₅₀-SNP80 killed 100% of *C. albicans* while SNP80 without DDAB showed no antifungal activity.

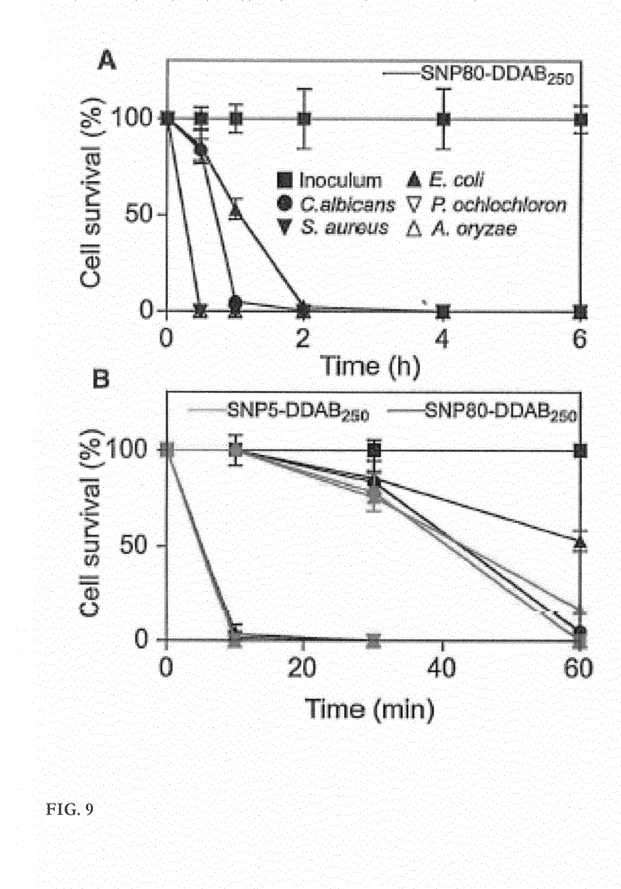

Similar tests were performed with bacteria (*E*. *coli and S. aureus*) and molds (*A. oryzae* and *P. ochrochloron*) and the results are shown in Figure 9. Yeast (*C*. *albicans*), bacteria (*E*. *coli and S. aureus*) and molds (*A. oryzae* and *P*. *ochrochloron*) were rapidly killed by SNPs coated with DDAB. The antimicrobial activity was evaluated as before. No viable microorganism was found in the medium after 2 h (Fig. 9A). *S. aureus* and molds were the most susceptible to the effect of SNP80-DDAB₂₅₀ followed by C. *albicans* and E. *coli,* respectively. Importantly, SNP5-DDAB₂₅₀ killed *E.coli* more rapidly than SNP80-DDAB₂₅₀ (Fig. 9B).

### Example 10: Antimicrobial activity of SNPs and SNP-DDAB coated on glass coverslips

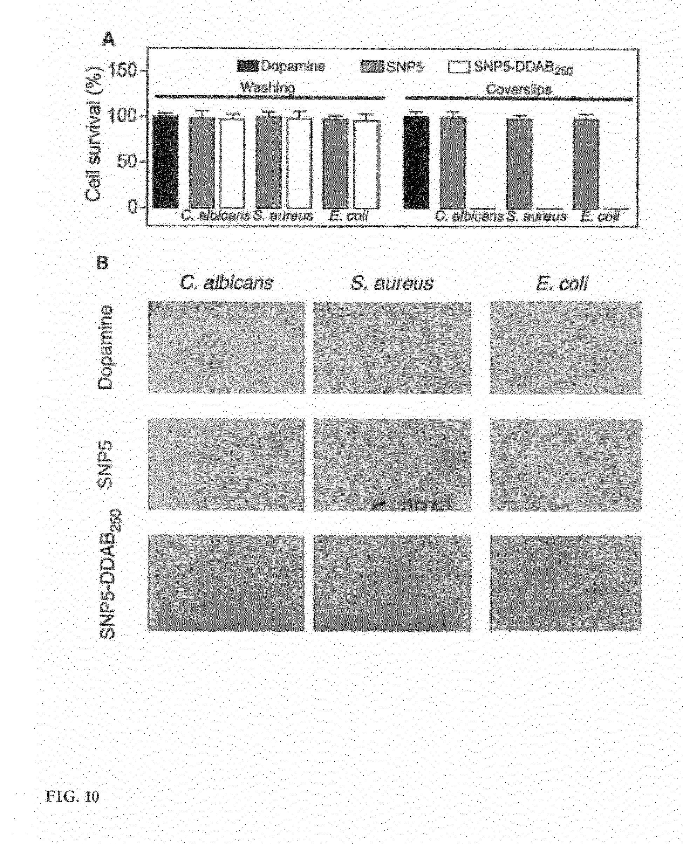

The antimicrobial activity due to the leaching of the SNPs was evaluated by washing the glass coverslips (sterilized for 30 min under UV light) coated with SNP5 and SNP5-DDAB₂₅₀ for 6 h with 1 ml of YPD (at 30 °C) or TSY (at 37 °C), under orbital shaking (150 rpm). The washing medium was tested against 1 × 10⁵ C. *albicans* cells, 1 × 10⁶ E. *coli* or *S. aureus* cells. No measureable antimicrobial activity was detected (Fig. 10), confirming that the SNPs were permanently bound to the glass surface. In Figure 10, counts are normalized relative to the control and expressed as mean ± standard deviation (n=4).

After confirming the absence of antimicrobial activity in the washing solutions, the antimicrobial activity of the surfaces was tested by adding 1 ml of YPD with 1 × 10⁵ C. *albicans* cells or 1 ml of TSY with 1 × 10³ *E*. *coli* or 1 × 10⁶ *S*. *aureus* cells to each coverslip and incubating at 30°C (fungi) or 37°C (bacteria) for 6 h, under orbital shaking (150 rpm). An aliquot of the medium was serially diluted in sterile distilled water and plated on YPD or TSY agar plates. The number of CFU was counted after incubation of the plates at 30°C or at 37°C for 24 h. The remaining medium was removed and the coverslips were rinsed twice with 1 ml of sterile water. After drying rapidly, the coverslips were plated with coated side down on YPD or TSY agar plates and incubated at 30 °C or at 37 °C.

A 100% reduction in *C*. *albicans, E. coli* and *S. aureus* was observed in the media containing the coverslips coated with SNP5-DDAB₂₅₀ relative to the control (coverslips coated with SNP5). Finally, the remaining medium was removed and the coverslips were rinsed with sterile water to remove non-adherent cells and plated upside down on YPD or TSY agar plates. After 24 h, no *C*. *albicans, E. coli* or *S*. *aureus* colonies were observed on the coverslips coated with SNP5-DDAB₂₅₀, whereas fungi and bacteria colonized the control coverslips coated with SNP5 (Fig. 10B). Overall our results show that glass coverslips coated with SNP5-DDAB₂₅₀ have antimicrobial activity against C. *albicans, E. coli* and *S*. *aureus.*

### Example 11: Dynamic Light Scattering (DLS) analysis of DDAB-SNP and DDAB-SNP80

The size of the coated SNPs were determined using dynamic light scattering (DLS) as described in Example 1.2.3. The results of this analysis are shown in Table 4.

**Table 4**

| SNPs | Size (nm)^{a} | MIC (µg/ml)^{b} | | |
|---|---|---|---|---|
| | | *C. albicans* | *S. aureus* | E. *coli* |
| SNP5 | 7.5 ± 1.7 | - | - | - |
| SNP5-DDAB | 34.6 ± 13.5 | 25 (4.5) | 12.5 (2.2) | 500 (89.1) |
| SNP80 | 78.9 ± 12.6 | - | - | - |
| SNP80-DDAB | 98.5 ± 6.0 | 50 (9.7) | 25 (4.9) | > 1000 (194.4) |

| | | | | |
|---|---|---|---|---|
| ^{a} Data corresponds to the average ± standard deviation of three independent measurements by DLS. ^{b} The value in parentheses is the amount of DDAB (µg) in the SNPs. | | | | |

### Example 12: Assessment of Antiviral Activity

MDCK cells obtained from the European Collection of Cell Cultures agency (ECACC), were grown in Dulbecco's Modified Eagle's Medium supplemented with 10% fetal bovine serum (FBS), 100 units/ml penicillin and 100 µg/ml streptomycin, at 37°C in a humidified-air atmosphere containing 5% CO₂. *Influenza A*/*PR*/*8*/*34* (H1N1) was obtained from Advanced Biotechnologies.

The antiviral activity of the coated glass coverslips was assessed by a methodology described in Halder et al. 'Preparation, application and testing of permanent antibacterial and antiviral coatings'. Nat. Protoc 2007 (2) 2412-2417. Briefly, glass coverslips (glass, glass dopamine coated with SNP5 and glass dopamine coated with SNP5-DDAB₂₅₀) were placed in 24-well plates and 20 µl of virus solution was deposited on the top of each sample and covered with parafilm to spread the drop. After 30 min. of incubation at room temperature, the samples were washed with 1.98 ml PBS and 2-fold serial dilutions were made. Then, confluent MDCK monolayers were washed twice with PBS and infected with 200 µl of each dilution for 1 h at room temperature. After incubation, the virus solution was aspirated and the cells were covered with agar medium (1:1 DME/F12 modified supplemented with 0.01% DEAE-dextran, 0.1% NaHCO3, 4 µg/ml trypsin, 100 units/ml penicillin, 100 µg/ml streptomycin and 0,6% agar) and incubated for 4 days at 37°C in a humidified-air atmosphere containing 5% CO₂. Finally, the agar overlay was removed and the cells were fixed with paraformaldehyde and stained with crystal violet (0.1 % in 20% v/v aqueous methanol).

The antiviral activity of the surfaces due to the leaching of SNPs was evaluated by washing the coverslips with PBS (1 ml) for 6 h under orbital shaking and incubating the washing with 20 µl of virus solution for 1 h at room temperature. The number of viral colonies was determined as before.

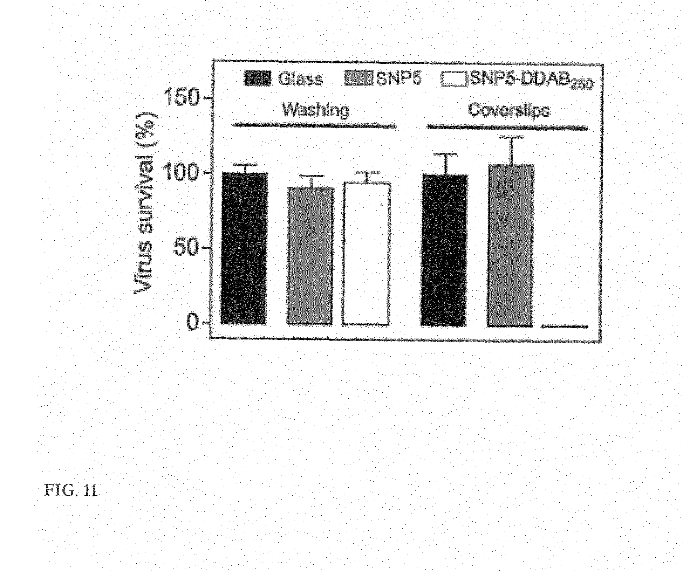

No measurable antiviral activity was observed (Fig. 11). Then, a virus suspension was added to the surface of the coverslips followed by incubation at room temperature for 30 min. Virus survival was evaluated by their ability to infect MDCK cells. According to Figure 11, no survival was observed after virus exposure to coverslips coated with SNP5-DDAB₂₅₀ relative to the control (coverslips coated with SNP5).

### Example 13: Physical immobilization of surfactants on CNT

SWCNT were chosen for use in this study as they have been shown to exhibit antimicrobial activity (Kang et al. 'Single-walled carbon nanotubes exhibit strong antimicrobial activity.' Langmuir 2007 (23) 8670- 8673) which is stronger than for MWCNTs (Arias et al 'Inactivation of Bacterial Pathogens by Carbon Nanotubes in Suspensions. Langmuir 25 (2009) 3003- 3012)

Carboxylated single-wall carbon nanotubes of 1.5 nm in diameter and 1 - 5 µm in length (>95% purity; 2-7 wt% COOH by titration) were purchased from NanoLab (USA) and used without further processing. SWCNTs and DDAB (Sigma-Aldrich) were mixed in a mass ratio from 0.1 to 100 (e.g. 1500 µg/ml DDAB is mixed with 100 µg/ml SWCNT suspension yielding a mass ratio of 15) in PBS and then sonicated. A 6 mm probe was used with sonication cycles of 1 h with 5:1 seconds of pulse (on:off). The amplitude used was typically 50%. After each cycle the released energy was registered and the optical density at 600 nm was measured. Typically, centrifugation cycles were performed on a centrifuge at 10,000 g for 20 min, to remove the aggregates.

### Example 14: Characterization of the SWCNT

The evolution of SWCNTs resuspension was performed by optical density measurement (at 600 nm) on a microplate reader. N-phenyl-1-naphthylamine (NPN) (Sigma-Aldrich) was used to determine the DDAB critical micelle concentration (CMC) and the presence of micelles on the SWCNT suspension. A solution of NPN of 2 x 10⁻¹ M in ethanol was prepared and further diluted in PBS to the working concentration of 2 x 10⁻⁴ M. DDAB or SWCNT-DDAB suspensions were mixed in equal volumes on a opaque 96-well plate and the fluorescence measured with the assistance of a SpectraMax Fluoremeter using an excitation and emission wavelength of 320 and 450 nm, respectively.

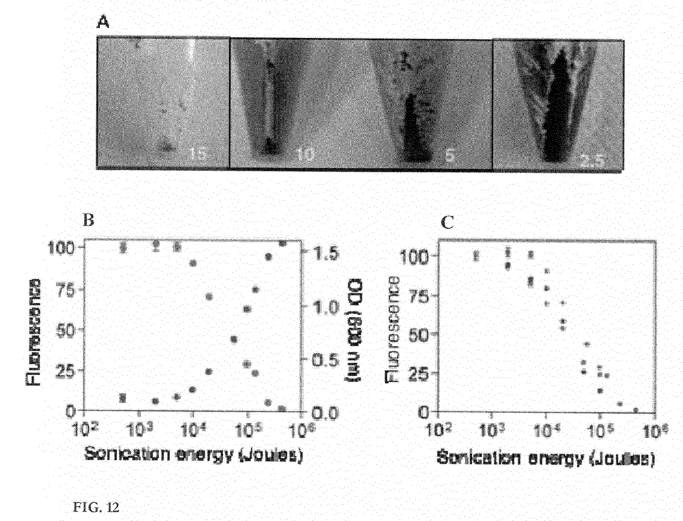

In order to be able to accurately assess the antimicrobial activity of SWCNT:DDAB it was imperative to determine whether free surfactant was co-existing in solution with the complex SWCNT:DDAB. A centrifugation step to separate SWCNT:DDAB from free DDAB is not a reliable methodology since it requires extensive centrifugation velocities and the nanotubes tend to aggregate. It was observed that increasing the mass ratios of DDAB to SWCNTs from 2.5 to 100 decreased substantially the recovered pellet (Fig. 12A), suggesting the adsorption of most of the initial DDAB at the surface of the SWCNTs. To confirm the disappearance of micelles of DDAB a fluorescent probe, NPN, was used (Brito et al. 'Determination of the critical micelle concentration of surfactants using the fluorescent probe N-phenyl-1-naphthylamine' Anal. Biochem 1986 (152) 250-255) which has an increase in the fluorescence quantum yield after partition into a micellar phase from the aqueous phase. Mixtures of DDAB (10 - 10,000 µg/ml) and SWCNT (100 µg/ml) were prepared and sonicated for several cycles. The released energy was registered and aliquots were taken for absorbance and fluorescent measurements in the presence of NPN. Interestingly, the optical density of the suspension increases while the quantum yield of NPN decreases (Figs. 12B and 12C). This result suggests the disappearance of the existing micelles on the DDAB starting solution and the avidity of DDAB for SWCNTs. Tests also confirmed that sonication, up to 10,000 joules, did not disrupt the micelles, confirmed by persistence of the fluorescence levels (results not shown). Overall results indicated that most of the DDAB initially added to SWCNTs was adsorbed to the surface of the nanotube.

### Example 15: Preparation of alginate microparticles

Alginic acid and calcium chloride were purchased from Sigma-Aldrich. Calcium-alginate microparticles were prepared at room temperature with a Nisco Nozzle Var-J1 (Nisco, Switzerland) and coaxial nitrogen air flow. Briefly, an alginate solution (0.5 - 2%) was extruded with controlled flow (10 - 200 ml/h) through a variable internal diameter needle (ID ∼ 200 - 450 µm). The controlled coaxial flow of nitrogen (0.5 - 15 L/min) cuts the alginate flow on the other edge of the needle, projecting the alginate drop against a calcium chloride solution of variable concentration (0.05 - 1 M) with or without magnetic stirring. The needle length (1 - 5 mm) and nozzle height (2 - 20 cm) to the calcium solution were also screened. Each sample was visualized and photographed under the contrast phase microscope and the sizes were assessed with ImageJ.

### Example 16: Preparation of alginate micoparticle-DDAB-SWCNT composite

Magnetic nanoparticles were acquired from PlasmaChem (Germany). To prepare the alginate microparticles-loaded with DDAB-SWCNT and magnetic nanoparticles defined standard concentrations for each of the components were determined. The typical extruded composite suspension is composed of 2% alginate, 10 - 100 µg/ml of magnetic nanoparticles (PlasmaChem, Germany), 25 µg/ml of SWCNT and DDAB. The latter amount depends on the DDAB/SWCNT mass ratio chosen. This mix was typically extruded against a 0.1 M CaCl2 solution at a flow rate of 10 - 20 ml/h (needle with 200 µm i.d.) or 50 - 100 ml/h (needle with ∼420 µm i.d.). A nitrogen coaxial flow rate of 5 - 8 l/min was used to generate beads.

### Example 17: Assessment of Antimicrobial activity

Typically, SWCNTs coated with DDAB or other surfactants were diluted taking in account the initial surfactant concentration being the SWCNT concentration estimated by the corresponding mass ratio used. The antimicrobial activity of the coated SWCNTs was tested in suspension against *Candida albicans* ATCC 10231 (C. *albicans,* fungi), *Staphylococcus aureus* ATCC 6538 (*S. aureus,* bacteria gram-positive) and *Escherichia coli* ATCC 25922 (E. *coli,* bacteria gram-negative). Yeast Peptone Dextrose (YPD) and Tryptone Soy Yeast (TSY) media were used to culture yeast and bacteria, respectively. Growth kinetics of the different microorganisms (1 × 10⁵ cells/ml) exposed to variable concentrations of DDAB-SWCNT suspended in PBS (500 - 0.3 µg/ml of DDAB which corresponds to a 33 - 0.002 and to a 5 - 0.0003 µg/ml of SWCNT under a mass ratio of 15 and 100, respectively) was evaluated by absorbance at 600 nm. Inoculum corresponds to cells incubated without CNTs. The samples were prepared in a 96-well plate and incubated for 18 h at 30°C (fungi) or 37°C (bacteria) with constant shaking in a Biotek Synergy Mx spectrophotometer.

DDAB-SWCNTs (mass ratio of DDAB:SWCNT) of 15 and 100 showed high antimicrobial activity against *C*. *albicans, S. aureus* and E. *coli,* exhibiting minimal inhibitory concentrations (MIC) of approximately 2, 0.5 and 31 µg/ml, respectively (Table 4). These MIC values compare favourably to the ones obtained for silica nanoparticles coated with DDAB. Also, these values compare favourably to the ones reported in the literature using CNTs. The lowest concentration ever reported for an effective antimicrobial activity of SWCNTs in suspension (although in this case forming aggregates) was 1 µg/ml (Kang et al. 'Single-walled carbon nanotubes exhibit strong antimicrobial activity'. Langmuir 2007 (23) 8670- 8673).

**Table 4**

| **DDAB-SWCNT (mass ratio)** | **MIC (µg/ml)** | | | | | |
|---|---|---|---|---|---|---|
| | ***C. albicans*** | | ***S. aureus*** | | ***E. coli*** | |
| | **DDAB** | **SWCNT** | **DDAB** | **SWCNT** | **DDAB** | **SWCNT** |
| SNP5-DDAB₂₅₀ | 4.5 | - | 2.2 | - | 500 | - |
| SNP80-DDAB₂₅₀ | 9.7 | - | 4.9 | - | 194.4 | - |
| SWCNT₁₅-DDAB | 7.8 | 0.5 | 1.95 | 0.13 | 31 | 2 |
| SWCNT₁₀₀-DDAB | 2 | 0.02 | 0.5 | 0.005 | 31 | 0.31 |

| | | | | | | |
|---|---|---|---|---|---|---|
| Table 4: MIC of complexed DDAB | | | | | | |

Advantageously, DDAB acts simultaneously as a dispersant agent of the SWCNTs and as an antimicrobial agent.

It is apparent that the antimicrobial complexes of the invention demonstrate effective antimicrobial activity both in suspension and when immobilized on surfaces. The surfactants exhibit low minimal inhibitory concentrations compared with soluble surfactants. Thus, the complexes of the invention can be used to prepare highly active antimicrobial coatings with a broad spectrum of activity. The inventors have shown that when the nanomaterial complexes are applied to a surface, a non-leaching surface coating is obtained such that a long-lasting antimicrobial effect can be achieved.

The invention also encompasses methods of preparing the nanomaterial complexes and of applying the complex to a surface to create an antimicrobial coating.

## Claims

1. An antimicrobial nanomaterial complex comprising a surfactant and a nanomaterial.

2. An antimicrobial nanomaterial complex as claimed in claim 1, wherein the surfactant is an amphiphilic polycation.

3. An antimicrobial nanomaterial complex as claimed in claim 2, wherein the amphiphilic polycation is a quaternary ammonium cationic surfactant.

4. An antimicrobial nanomaterial complex as claimed in claim 3, wherein the quaternary ammonium cationic surfactant is selected from the group consisting of:
dodecyltrimethylammonium bromide (DTAB),
didodecyldimethylammonium bromide (DDAB),
tridodecylmethylammonium chloride (TMAC),
ditetradecyldimethylammonium bromide (DTDAB),
dihexadecyldimethylammonium bromide (DHDAB)
and dioctadecyldimethylammonium bromide (DODAB).

5. An antimicrobial nanomaterial complex as claimed in any preceding claim, wherein the nanomaterial is a silica nanoparticle or a carbon nanotube.

6. An antimicrobial nanomaterial complex as claimed in claim 5, wherein the nanomaterial is a single-walled carbon nanotube.

7. An antimicrobial nanomaterial complex as claimed in any preceding claim, wherein the nanomaterial has at least one dimension of 500 nm or less.

8. An antimicrobial nanomaterial complex as claimed in claim 7, wherein the nanomaterial is a nanoparticle having at least one dimension of 290 nm or less.

9. An antimicrobial nanomaterial complex as claimed in any preceding claim, having antiviral activity.

10. A method of preparing the antimicrobial nanomaterial complex of any of claims 1 to 9, comprising the steps of:
- providing a solution of surfactant having a concentration above its critical micelle concentration; and
- adding the solution to a nanomaterial suspension.

11. Use of an antimicrobial nanomaterial complex as claimed in any of claims 1 to 9 as an antimicrobial coating.

12. A method of preparing an item with an antimicrobial coating, wherein the method comprises coating at least one surface or part of a surface of the item with an antimicrobial nanomaterial complex as claimed in any of claims 1 to 9.

13. A method of preparing an item with an antimicrobial coating as claimed in claim 12, wherein the at least one surface or part of a surface is treated with an adhesive prior to coating.

14. Use of a surfactant as an antimicrobial agent in an antimicrobial nanomaterial complex comprising a nanomaterial.
